# EUROPÄISCHE PATENTSCHRIFT

(11) **EP 3 850 412 B1**
(45) Veröffentlichungstag und Bekanntmachung des Hinweises auf die Patenterteilung: **06.12.2023**
(21) Anmeldenummer: 18773956.0
(22) Anmeldetag: 12.09.2018
(51) Int. Cl.: G02B 7/00, G02B 27/28, G02B 5/30, H01S 3/00

(54) **OPTISCHE BAUGRUPPE, INSBESONDERE ZUR POLARISATION EINES LASERSTRAHLS, UND EUV-STRAHLUNGSERZEUGUNGSVORRICHTUNG DAMIT**
OPTICAL ASSEMBLY, IN PARTICULAR FOR POLARIZATION OF A LASER BEAM, AND EUV RADIATION GENERATING DEVICE THEREWITH
ENSEMBLE OPTIQUE, NOTAMMENT POUR LA POLARISATION D'UN FAISCEAU LASER, ET DISPOSITIF GÉNÉRATEUR DE RAYONNEMENT EUV L'UTILISANT

(43) Veröffentlichungstag der Anmeldung: 21.07.2021
(73) Patentinhaber: TRUMPF Lasersystems for Semiconductor Manufacturing GmbH, 71254 Ditzingen (DE)
(72) Erfinder: ERICHSON, Oliver, 71634 Ludwigsburg (DE)
(74) Vertreter: Kohler Schmid Möbus Patentanwälte
(86) Internationale Anmeldenummer: PCT/EP2018/074547
(87) Internationale Veröffentlichungsnummer: WO 2020/052744

(56) Entgegenhaltungen:
- EP-A1- 0 413 639
- EP-A1- 2 369 391
- WO-A1-2017/063686
- DE-A1-102014 105 064
- GB-A- 2 136 145
- US-A1- 2007 267 647
- US-A1- 2008 002 751

## Beschreibung

Die vorliegende Erfindung betrifft eine optische Baugruppe, insbesondere zur Polarisation eines Laserstrahls, gemäß dem Oberbegriff von Anspruch 1. Eine solche optische Baugruppe, die in Form einer Wafer-Linseneinheit ausgebildet ist, ist aus der EP 2 369 391 A1 bekannt geworden.

Die Erfindung betrifft auch eine EUV-Strahlungserzeugungsvorrichtung mit mindestens einer solchen optischen Baugruppe.

Ein plattenförmiges transmittierendes optisches Element kann zur Polarisation von Licht, beispielsweise in Form eines (z.B. unpolarisierten) Laserstrahls, verwendet werden, wenn der Laserstrahl an einer Strahleintrittsfläche des optischen Elements unter dem so genannten Brewster-Winkel auftrifft. Ein an der Strahleintrittsfläche reflektierter Strahlungsanteil ist in diesem Fall nahezu ausschließlich senkrecht zur Einfallsebene des Laserstrahls auf die Strahleintrittsfläche polarisiert (s-Polarisation), d.h. die Reflektivität für einen zweiten, dazu senkrechten (p-polarisierten) Strahlungsanteil ist nahezu Null. Ein von der Strahleintrittsfläche transmittierter Strahlungsanteil weist daher typischerweise einen hohen p-polarisierten Strahlungsanteil parallel zur Einfallsebene des auftreffenden Laserstrahls auf.

Eine optische Baugruppe zur Polarisation eines Laserstrahls kann mehrere transmittierende optische Elemente in Form von planparallelen Platten aufweisen, die parallel zueinander und jeweils mit ihrer Strahleintrittsfläche unter dem Brewster-Winkel zum einfallenden Laserstrahl ausgerichtet sind, um den vergleichsweise kleinen s-polarisierten Strahlungsanteil, der von einer jeweiligen planparallelen Platte transmittiert wird, weiter zu verringern, so dass der aus der Polarisatoranordnung austretende Laserstrahl nahezu ausschließlich p-polarisiert ist.

Insbesondere für den Fall, dass die planparallelen Platten in einem vergleichsweise geringen Abstand voneinander angeordnet sind, tritt jedoch das Problem konstruktiver und destruktiver Interferenz zwischen Teilstrahlen auf, die an den Strahleintrittsflächen bzw. an den Strahlaustrittsflächen der planparallelen Platten reflektiert werden. Um Interferenz-Effekte zu vermeiden, wird der Abstand zwischen zwei im Strahlweg aufeinander folgenden Platten daher typischerweise so groß gewählt, dass sich die reflektierten Teilstrahlen nicht überlappen. Die Polarisatoranordnung benötigt in diesem Fall jedoch einen ggf. erheblichen Bauraum.

In der WO 2019/011419 A1 wird zur Vermeidung der oben beschriebenen Interferenz-Effekte vorgeschlagen, die Strahleintrittsflächen und die Strahlaustrittsflächen der plattenförmigen optischen Elemente jeweils unter mindestens einem Keilwinkel zueinander auszurichten. Auf diese Weise können die plattenförmigen optischen Elemente in möglichst geringen Abständen voneinander angeordnet werden. Um trotz der Keilform der plattenförmigen optischen Elemente die Brewster-Bedingung zu erfüllen, werden die plattenförmigen optischen Elemente derart zueinander ausgerichtet (typischerweise relativ zueinander verdreht), dass der Laserstrahl weiterhin unter dem Brewster-Winkel auf die Strahleintrittsflächen auftrifft. Zur Aufnahme der plattenförmigen optischen Elemente in einer vorgegebenen Ausrichtung und Position relativ zueinander ist eine Halterung vorgesehen, die beispielsweise am seitlichen Rand der plattenförmigen optischen Elemente angreifen kann, um die plattenförmigen optischen Elemente in der Halterung zu fixieren.

Eine optische Baugruppe zur Polarisation eines Laserstrahls, die eine Mehrzahl von plattenförmigen optischen Elementen aufweist, zwischen denen Abstandshalter angeordnet sind, ist aus der US 2008/0002751 A1 bekannt geworden.

### Aufgabe der Erfindung

Der Erfindung liegt die Aufgabe zugrunde, eine optische Baugruppe der eingangs genannten Art derart weiterzubilden, dass die plattenförmigen optischen Elemente mit hoher Präzision relativ zueinander positioniert werden können, sowie eine EUV-Strahlungserzeugungsvorrichtung mit einer solchen optischen Baugruppe bereitzustellen.

### Gegenstand der Erfindung

Diese Aufgabe wird gemäß einem ersten Aspekt gelöst durch eine optische Baugruppe gemäß Anspruch 1.

Die Abstandshalter werden zur Realisierung der punktförmigen Anlage zumindest teilweise in einen Spalt zwischen zwei benachbarte plattenförmige optische Elementen eingebracht. Die genaue Winkellage der plattenförmigen optischen Elemente relativ zueinander (Winkelgenauigkeit ca. ± 0,02°) wird mit Hilfe einer punktförmigen Anlage von mindestens drei Abstandshaltern an den jeweiligen Strahleintritts- bzw. Strahlaustrittsflächen realisiert, die an mindestens drei unterschiedlichen Positionen innerhalb des Spalts angeordnet sind. Abhängig von den Abmessungen bzw. von der Geometrie der plattenförmigen optischen Elemente kann es günstig sein, wenn an Stelle von drei Abstandshaltern vier oder ggf. mehr Abstandshalter verwendet werden, um die mechanische Stabilität zu erhöhen und die Kippgefahr zu minimieren. Beispielsweise können für die Beabstandung von rechteckigen plattenförmigen optischen Elementen, deren Längsseite doppelt oder drei Mal so lang ist als deren Querseite, vier oder ggf. mehr Abstandshalter sinnvoll sein.

Die plattenförmigen optischen Elemente können in einer Stapelrichtung übereinander gestapelt und durch die Abstandshalter, die in die Spalte zwischen den plattenförmigen optischen Elemente eingebracht werden, in ihrer relativen Winkellage zueinander ausgerichtet werden. Im einfachsten Fall weist die optische Baugruppe zwei plattenförmige optische Elemente auf, die übereinander gestapelt sind, in der Regel werden aber mehr als zwei, beispielsweise drei, vier, fünf, sechs, ... plattenförmige optische Elemente übereinander gestapelt, um den Laserstrahl zu polarisieren. Die hier beschriebene optische Baugruppe muss nicht zwingend für die Polarisation eines Laserstrahls verwendet werden, vielmehr kann diese z.B. als Etalon dienen, da auch bei Etalons ggf. eine windschiefe bzw. verkippte Ausrichtung der plattenförmigen optischen Elemente sinnvoll sein kann. Bei der Verwendung als Etalon weist die optische Baugruppe in der Regel zwei plattenförmige optische Elemente auf, die durch einen Spalt getrennt sind, der z.B. keilförmig ausgebildet sein kann. Aufgrund der Keilform bzw. der nicht parallelen Ausrichtung der plattenförmigen optischen Elemente ist auch in diesem Fall die Verwendung von Distanzplatten oder dergleichen problematisch.

Im Gegensatz zur weiter oben beschriebenen Verwendung von Abstandshaltern werden plattenförmige optische Elemente herkömmlicherweise einzeln gefasst, d.h. es wird für jedes einzelne plattenförmige optische Element eine Halterung bzw. eine Fassung angefertigt, die eine präzise bearbeitete Auflagefläche sowie Federklammern bzw. federvorgespannte Klemmplatten aufweist, um das plattenförmige optische Element zu halten. Eine solche Halterung mehrerer plattenförmiger optischer Elemente durch eine jeweilige Federklemmung erfordert eine hohe Genauigkeit bei der Ausrichtung der Flächen zueinander sowie einen erheblichen Platzbedarf für die einzelne Klemmung, der durch die punktuelle Anlage der Abstandshalter deutlich reduziert werden kann.

Bei einer Ausführungsform weisen die Abstandshalter eine Kugelfläche zur punktförmigen Anlage an der jeweiligen Strahleintrittsfläche und an der jeweiligen Stahlaustrittsfläche auf. Die Kugelfläche kann an einer Kugel gebildet sein, die in der Halterung lose, z.B. in einem Kugelkäfig, gelagert wird. Derartige lose Kugeln können mit hoher Präzision hergestellt werden. Die Kugelfläche bzw. die Kugel muss keine vollständige Sphäre bilden, vielmehr kann die Kugel seitlich abgeschnitten sein und/oder an einem Schaft angebracht sein. Wesentlich ist, dass die Kugelfläche an den jeweiligen plattenförmigen optischen Elementen anliegt, um die punktförmige Anlage zu realisieren. Die Winkellage der plattenförmigen optischen Elemente relativ zueinander hängt jeweils vom Kugel-Durchmesser der Kugelfläche ab, der sich bei der Herstellung der Abstandshalter präzise einstellen lässt. Durch die Verwendung der Kugelfläche lässt sich auch ein geringerer Abstand zwischen den plattenförmigen optischen Elementen realisieren als dies bei der weiter oben beschriebenen Klemmung der Fall ist.

Bei einer Weiterbildung weisen die Kugelflächen von mindestens zwei Abstandshaltern, die zwischen dem ersten und dem zweiten plattenförmigen optischen Element angeordnet sind, einen unterschiedlichen Kugel-Durchmesser auf. Die plattenförmigen optischen Elemente sind in der Regel zueinander verkippt, d.h. diese sind nicht parallel zueinander ausgerichtet, so dass zwischen zwei benachbarten plattenförmigen optischen Elementen ein keilförmiger Spalt gebildet ist. Die plattenförmigen optischen Elemente können insbesondere in zwei Raumebenen zueinander verkippt sein, d.h. praktisch beliebig windschief zueinander ausgerichtet sein. Um die zueinander verkippten plattenförmigen optischen Elemente geeignet auszurichten, ist es typischerweise erforderlich, Abstandshalter mit unterschiedlichen Kugel-Durchmessern zu verwenden.

Bei einer Weiterbildung weisen die Abstandshalter jeweils einen Kugelkopf auf, an dem die Kugelfläche gebildet ist, wobei sich an den Kugelkopf ein Schaft zur Lagerung des jeweiligen Abstandshalters in der Halterung anschließt. Aufgrund der verkippten Ausrichtung der plattenförmigen optischen Elemente relativ zueinander ist es erforderlich, die Kugelflächen möglichst genau in einer Ebene senkrecht zur Stapelrichtung zu positionieren, da ein seitlicher Versatz der punktförmigen Anlage den Winkel zwischen den plattenförmigen optischen Elementen verändert. Eine präzise Positionierung der Abstandshalter ist durch die Verwendung von Kugelstiften bzw. von Kugelbolzen möglich, die einen Kugelkopf und einen Schaft aufweisen, der in der Halterung beispielsweise in einer Bohrung oder dergleichen mit ausreichender Präzision gelagert werden kann. Bei der Verwendung von Kugeln, die in einem Kugelkäfig gelagert sind, besteht demgegenüber das Problem, dass diese ggf. aus dem Kugelkäfig herausfallen könnten.

Bei einer Weiterbildung weist der Schaft einen Absatz auf und bei mindestens zwei Abstandshaltern, deren Kugelflächen einen unterschiedlichen Kugel-Durchmesser aufweisen, sind ein Durchmesser eines ersten Schaftabschnitts zwischen dem Kugelkopf und dem Absatz und eine Länge eines zweiten Schaftabschnitts zwischen dem Absatz und einem Schaftende des Abstandshalters unterschiedlich groß. Um den Winkel zwischen den plattenförmigen optischen Elementen korrekt einzustellen, ist es erforderlich, dass ein Abstandshalter mit einem geeigneten Kugeldurchmesser an der richtigen Position in dem Spalt bzw. an einer entsprechenden Bohrung der Halterung angebracht wird. Dies kann durch das Vorsehen eines Absatzes an dem Schaft eines jeweiligen Abstandshalters erreicht werden, der in eine gestufte bzw. einen entsprechenden Absatz aufweisende Bohrung in der Halterung eingesetzt wird. Durch die Realisierung unterschiedlicher Durchmesser der ersten Schaftabschnitte zwischen dem Absatz und dem Kugelkopf und der Realisierung unterschiedlichen Längen der zweiten Schaftabschnitte zwischen dem Absatz und dem Schaftende kann sichergestellt werden, dass alle Abstandshalter an der richtigen Stelle in der Halterung angebracht werden (Schlüssel-Schloss-Prinzip).

Ein erster Abstandshalter, bei dem der erste Schaftabschnitt einen kleineren Durchmesser aufweist als ein anderer (zweiter) Abstandshalter weist hierbei typischerweise einen zweiten Schaftabschnitt mit einer größeren Länge zwischen dem Absatz und dem Schaftende auf als der zweite Abstandshalter. Ein solcher erster Abstandshalter mit dünnerem ersten Schaftabschnitt kann aufgrund der größeren Länge des zweiten Schaftabschnitts typischerweise nicht an einer für den zweiten Abstandshalter vorgesehenen Bohrung der Halterung angebracht werden, weil das Schaftende über die Bohrung übersteht. Ein zweiter Abstandshalter kann aufgrund des größeren Durchmessers des ersten Schaftabschnitts nicht in eine für den ersten Abstandshalter vorgesehene Bohrung eingesetzt werden.

Bei der optischen Baugruppe sind die Abstandshalter in der Halterung senkrecht zu einer Strahleintrittsfläche des ersten plattenförmigen optischen Elements kippbar und/oder verschiebbar gelagert. Die Abstandshalter sollten in einer Richtung senkrecht zur Strahleintrittsfläche des im Strahlengang ersten (beispielswiese des obersten) plattenförmigen optischen Elements der übereinander gestapelten Mehrzahl von optischen Elementen einen Bewegungs-Freiheitsgrad aufweisen, um die Dickentoleranz der plattenförmigen optischen Elemente ausgleichen zu können. Um dies zu erreichen, können die Abstandshalter, genauer gesagt deren Schaft, entlang der Richtung senkrecht zur Strahleintrittsfläche über eine vergleichsweise geringe Länge verschiebbar gelagert werden. Da bei der verschiebbaren Lagerung das Risiko eines Verklemmens besteht, ist es in der Regel günstiger, wenn die Abstandshalter verkippbar gelagert sind. Die Abstandshalter können in beiden Fällen zusätzlich federnd gelagert werden.

Bei der optischen Baugruppe weist ein jeweiliger Schaft eines Abstandshalters ein konvex gekrümmtes Schaftende auf und die Halterung umfasst mindestens ein Federelement zum Andrücken des Schaftendes gegen eine Anlagefläche der Halterung. Auf diese Weise kann eine kippbare Lagerung des Abstandshalters realisiert werden, bei welcher der Schaft aus einer Ruhelage, in welcher dieser parallel zur Bohrung ausgerichtet ist, geringfügig ausgelenkt bzw. verkippt werden kann, wenn auf den Kugelkopf eine Kraft wirkt, die parallel zur Stapelrichtung bzw. senkrecht zur ersten Strahleintrittsfläche ausgerichtet ist. Bei dem Federelement kann es sich beispielsweise um eine geschlitzte Blattfeder handeln, deren beide freien Enden in zwei parallel verlaufende Nuten an dem Schaft, beispielsweise an dem zweiten Schaftabschnitt, eingreifen. Der Schaft bzw. das Schaftende des Abstandshalters kann zu diesem Zweck in ein Langloch hineinragen, in dem die Blattfeder verläuft bzw. geführt ist. Zusätzlich zum Andrücken des Schaftendes gegen die Anlagefläche kann die Blattfeder eine Rückstellkraft auf den federnd gelagerten Schaft des Abstandshalters in Richtung auf die parallel zur Bohrung ausgerichtete Grundstellung erzeugen.

Bei einer Ausführungsform weisen jeweils zwei benachbarte plattenförmige optische Elemente einen minimalen Abstand von weniger als 3 mm voneinander auf. Unter dem minimalen Abstand zwischen den plattenförmigen optischen Elementen wird der minimale Abstand zwischen zwei beliebigen Punkten von zwei einander gegenüberliegenden Strahleintrittsflächen und Strahlaustrittsflächen verstanden. Wie weiter oben beschrieben wurde, kann aufgrund der punktförmigen Anlage der Abstand zwischen den plattenförmigen optischen Elementen sehr klein gewählt werden. Der minimale Abstand zwischen den plattenförmigen optischen Elementen wird durch den (minimalen) Durchmesser der als Abstandshalter dienenden Kugelflächen bestimmt: Der minimale Abstand zwischen zwei benachbarten plattenförmigen optischen Elementen ist hierbei in der Regel nur geringfügig kleiner als der kleinste Kugeldurchmesser der jeweiligen Abstandshalter.

Bei einer weiteren Ausführungsform sind die (planen) Strahleintrittsflächen und die (planen) Strahlaustrittsflächen der plattenförmigen optischen Elemente jeweils unter mindestens einem Keilwinkel zueinander ausgerichtet. Wie weiter oben beschrieben wurde, ist es bei der Verwendung der optischen Baugruppe zur Polarisation eines Laserstrahls zur Vermeidung von Interferenzeffekten günstig, wenn die Strahleintrittsfläche und die Strahlaustrittsfläche eines jeweiligen plattenförmigen optischen Elements nicht parallel zueinander ausgerichtet sind. Mindestens ein plattenförmiges optisches Element kann nicht nur einen, sondern zwei Keilwinkel aufweisen, die in zwei typischerweise zueinander senkrechten Ebenen verlaufen. Um trotz des Keilwinkels die Brewster-Bedingung für den auf die jeweilige Strahleintrittsfläche eines plattenförmigen optischen Elements auftreffenden Laserstrahl zu erfüllen, werden die plattenförmigen optischen Elemente derart zueinander ausgerichtet (typischerweise relativ zueinander verdreht), dass der Laserstrahl bei jedem plattenförmigen optischen Element unter dem Brewster-Winkel auf die Strahleintrittsflächen auftrifft.

Bei einer weiteren Ausführungsform sind bei mindestens zwei, insbesondere bei allen plattenförmigen optischen Elementen die Strahleintrittsflächen und die Strahlaustrittsflächen nicht parallel zueinander ausgerichtet. Die Strahleintrittsflächen und die Strahlaustrittsflächen der plattenförmigen optischen Elemente können grundsätzlich beliebig (windschief) zueinander im Raum orientiert werden, d.h. die plattenförmigen optischen Elemente können nicht nur in einer, sondern in zwei Raumebenen zueinander verkippt angeordnet sein, sofern sichergestellt ist, dass die Strahleintrittsflächen jeweils unter dem Brewster-Winkel zum Laserstrahl ausgerichtet sind. Ein jeweiliger Spalt zwischen zwei plattenförmigen optischen Elementen weist daher typischerweise eine ortabhängig variierende Spaltbreite bzw. eine Keilform auf. Auch eine windschiefe Ausrichtung der plattenförmigen optischen Elemente kann vorteilhaft sein, um Interferenzeffekte zu minimieren.

Bei einer weiteren Ausführungsform weist die Halterung eine Mehrzahl von Leisten zum Andrücken einer jeweiligen Seitenfläche eines plattenförmigen optischen Elements gegen einen Grundkörper der Halterung auf. Die gefassten, an den Abstandshaltern anliegenden und geeignet ausgerichteten plattenförmigen optischen Elemente können an einer jeweiligen Seitenfläche, beispielsweise an einer jeweiligen Längsseite, mittels einer ggf. gefedert gelagerten Leiste gegen den Grundkörper der Halterung angedrückt werden, um das jeweilige plattenförmige optische Element zu fixieren. Die plattenförmigen optischen Elemente können beispielsweise eine Dicke in der Größenordnung von ca. 5-10 mm und eine Längsseite in der Größenordnung von ca. 150-170 mm aufweisen. Die Querseite der plattenförmigen optischen Elemente kann beispielsweise eine Länge in der Größenordnung von ca. 50 mm aufweisen. Durch das Andrücken gegen den Grundkörper kann die Kühlung der plattenförmigen optischen Elemente vereinfacht werden, wie nachfolgend beschrieben wird. Es ist zu diesem Zweck nicht erforderlich, dass sich die Leisten entlang der gesamten Länge der Längsseite eines jeweiligen plattenförmigen optischen Elements erstrecken.

Bei einer weiteren Ausführungsform weist die Halterung einen insbesondere monolithischen Grundkörper mit mindestens einem Kühlkanal zur Durchströmung mit einem Kühlfluid auf. Der Kühlkanal kann mittels eines Kühlfluids, beispielsweise mit Wasser, durchströmt werden, um die plattenförmigen optischen Elemente zu kühlen, die zu diesem Zweck an dem Grundkörper - in der Regel in der Nähe des Kühlkanals - anliegen.

Bei einer weiteren Ausführungsform umfasst die optische Baugruppe mindestens ein bevorzugt gefedertes Andrückelement zum Andrücken der mittels der Abstandshalter beabstandeten Mehrzahl von plattenförmigen optischen Elementen gegen eine Andrückfläche der Halterung. Die Mehrzahl der plattenförmigen optischen Elemente, die durch die in die Spalte zwischen benachbarte plattenförmige optische Elemente eingebrachten Abstandshalter relativ zueinander ausgerichtet und übereinander gestapelt sind, werden gemeinsam d.h. als Paket, mit Hilfe der mindestens einen Leiste gegen die Andrückfläche angedrückt und hierbei geklemmt. Aufgrund des weiter oben beschriebenen Bewegungs-Freiheitsgrads der Abstandshalter sind die plattenförmigen optischen Elemente erst nach dem Klemmen endgültig in ihrer relativen Lage und Ausrichtung zueinander definiert. In der geklemmten Stellung liegen alle Abstandshalter in einer vorgegebenen Position und mit einer punkförmigen Anlage an den jeweiligen Stahleintrittsflächen bzw. Strahlaustrittsflächen an.

Bei einer weiteren Ausführungsform sind die plattenförmigen optischen Elemente mit der Halterung verklebt. Die Verklebung ermöglicht einen besseren Wärmeübergang zwischen der Halterung bzw. dem Grundkörper der Halterung und den plattenförmigen optischen Elementen sowie einem verbesserten Transportschutz, sofern ein besserer Wärmeübergang bzw. ein verbesserter Transportschutz erforderlich sind. Für die Verklebung der plattenförmigen optischen Elemente können in der Halterung Bohrungen vorgesehen sein, durch die der Klebstoff appliziert werden kann. Die Bohrungen für den Klebstoff können beispielsweise durch die Leisten hindurch verlaufen, welche eine jeweilige Seitenfläche der plattenförmigen optischen Elemente gegen die Anlagefläche der Halterung andrücken.

Entsprechende Bohrungen für die Applikation des Klebstoffs können auch entlang der Anlagefläche der Halterung gebildet sein.

Bei einer weiteren Ausführungsform sind die Abstandshalter zwischen unterschiedlichen plattenförmigen optischen Elementen mit einem lateralen Versatz zueinander in der Halterung angeordnet, d.h. die Abstandshalter sind in Bezug auf eine Richtung senkrecht zur Strahleintrittsfläche des im Strahlweg ersten plattenförmigen optischen Elements seitlich versetzt. Entsprechend können auch die plattenförmigen optischen Elemente nicht unmittelbar übereinander angeordnet, sondern lateral versetzt in der Halterung angebracht bzw. fixiert sein.

Insbesondere für den Fall, dass die plattenförmigen optischen Elemente in zwei Raumebenen zueinander verkippt sind, ist im Extremfall für jeden Abstandshalter ein individueller Kugel-Durchmesser, d.h. ein unterschiedlicher Typ von Abstandshalter, erforderlich. Um die Anzahl von unterschiedlichen Typen von Abstandshaltern möglichst zu minimieren, kann es günstig sein, die Positionen der Abstandshalter in einer Ebene parallel zur Strahleintrittsfläche des ersten plattenförmigen optischen Elements und/oder die plattenförmigen optischen Elemente selbst lateral zu versetzen. Beispielsweise werden bei einer optischen Baugruppe, welche sechs plattenförmige optische Elemente und entsprechend fünf Spalte zwischen den plattenförmigen optischen Elementen mit jeweils vier Abstandshaltern aufweist, insgesamt zwanzig Abstandshalter benötigt. Bei einer geeigneter (individueller) Wahl eines jeweiligen Abstandes zwischen zwei benachbarten plattenförmigen optischen Elementen und bei geeigneter Wahl der Positionen der Abstandshalter entlang der Strahleintritts- bzw. der Strahlaustrittsflächen lässt sich die Anzahl der unterschiedlichen Typen von Abstandshaltern insgesamt auf sechs reduzieren.

Ein weiterer Aspekt der Erfindung betrifft eine EUV-Strahlungserzeugungsvorrichtung, umfassend: eine Treiberlasereinrichtung zur Erzeugung eines Laserstrahls, eine Vakuum-Kammer, in der ein Target-Material anordenbar ist, eine Strahlführungseinrichtung zur Führung des Laserstrahls von der Treiberlasereinrichtung zum Target-Material, sowie eine optische Baugruppe wie weiter oben beschrieben, die zur (linearen) Polarisation des Laserstrahls und/oder als optischer Isolator dient. Die Strahlführungseinrichtung führt den Laserstrahl zu einem fokussierenden Element bzw. zu einer Fokussieranordnung, welche dazu dient, den Laserstrahl in einem Zielbereich zu fokussieren. In dem Zielbereich wird ein Target-Material (z.B. Zinn) bereitgestellt, welches bei der Bestrahlung mit dem Laserstrahl in einen Plasma-Zustand übergeht und hierbei EUV-Strahlung emittiert. Bei der optischen Baugruppe, die zur Polarisation des Laserstrahls dient, ist die Strahleintrittsfläche eines jeweiligen plattenförmigen optischen Elements unter dem Brewster-Winkel zum einfallenden Laserstrahl ausgerichtet. Im Sinne dieser Anmeldung wird unter dem Auftreffen "unter dem Brewster-Winkel" α_{B} ein Auftreffen des Laserstrahls mit einer Abweichung vom Brewster-Winkel α_{B} in der Größenordnung von ca. +/- 0,5° verstanden, d.h. auch Winkel α_{B} +/- 0,5° fallen unter den Begriff "unter dem Brewster-Winkel".

Bei einer Ausführungsform weist die EUV-Strahlungserzeugungsvorrichtung eine Phasenschiebe-Einrichtung auf, die zwischen der optischen Baugruppe und dem Target-Material angeordnet ist, wobei die Phasenschiebe-Einrichtung zur Bildung eines am Target-Material reflektierten Laserstrahls ausgebildet ist, dessen Polarisationsrichtung senkrecht zur Polarisationsrichtung des zum Target-Material propagierenden Laserstrahls ausgerichtet ist. Die Polarisationsrichtung des Laserstrahls wird in diesem Fall an der Phasenschiebe-Einrichtung insgesamt um 90° gedreht, so dass die Polarisationsrichtung des erneut auf die optische Baugruppe treffenden, vom Target-Material zurück reflektierten Laserstrahls senkrecht zur Polarisationsrichtung des zum Target-Material propagierenden Laserstrahls ausgerichtet ist.

Bei der Phasenschiebe-Einrichtung kann es sich beispielsweise um einen phasenschiebenden Spiegel handeln, der beim Durchlauf des Laserstrahls in Vorwärtsrichtung sowie beim Durchlauf des Laserstrahls in Rückwärtsrichtung jeweils einen Gangunterschied von λ/4 erzeugt, wodurch insgesamt ein Gangunterschied von λ/2 und damit eine Drehung der Polarisationsrichtung um 90° entsteht. Durch die Drehung der Polarisationsrichtung wird der zurück reflektierte Laserstrahl von der optischen Baugruppe umgelenkt, genauer gesagt an den jeweiligen plattenförmigen optischen Elementen reflektiert, so dass dieser nicht mehr zur Strahlquelle zurück gelangen kann und daher die optische Baugruppe als optischer Isolator wirkt.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Grundkörpers einer Halterung für sechs plattenförmige optische Elemente einer optischen Baugruppe,
- Fig. 2a: eine schematische Schnittdarstellung des Grundkörpers von Fig. 1 mit einem plattenförmigen optischen Element, welches an den Kugelköpfen von vier Abstandshaltern punktförmig auf- bzw. anliegt,
- Fig. 2b: eine schematische Schnittdarstellung entlang der Schnittlinie A-A von Fig. 2a mit den vier Abstandshaltern, die in eine jeweilige Bohrung eingesetzt sind,
- Fig. 3: eine schematische Darstellung eines Abstandshalters in Form eines Kugelstifts mit einem Schaft, der einen Absatz aufweist,
- Fig. 4: eine schematische Draufsicht auf eine Abdeckplatte des Grundkörpers, in die Langlöcher eingebracht sind, die mit Blattfedern versehen sind,
- Fig. 5: eine schematische Schnittdarstellung einer optischen Baugruppe, bei der in der Halterung sechs plattenförmige, durch Abstandshalter voneinander getrennte optische Elemente angeordnet sind,
- Fig. 6: eine schematische Schnittdarstellung analog Fig. 5 mit einer gefederten Leiste zum Andrücken der gestapelten plattenförmigen optischen Elemente gegen eine Andrückfläche der Halterung,
- Fig. 7: einer perspektivische Darstellung der optischen Baugruppe von Fig. 6, sowie
- Fig. 8: einer EUV-Strahlungserzeugungsvorrichtung mit einer optischen Baugruppe gemäß Fig. 7, die als optischer Isolator verwendet wird.

In der folgenden Beschreibung der Zeichnungen werden für gleiche bzw. funktionsgleiche Bauteile identische Bezugszeichen verwendet.

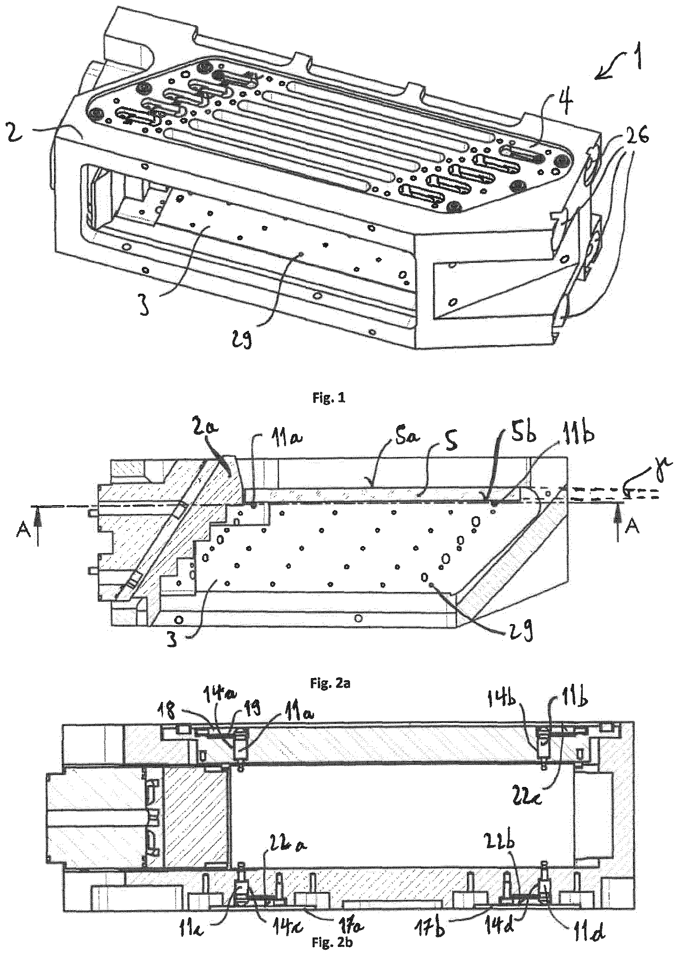

In Fig. 1 ist eine Halterung 1 für eine Mehrzahl von in Fig. 1 nicht bildlich dargestellten plattenförmigen optischen Elementen gezeigt. Die Halterung 1 weist einen im Wesentlichen quaderförmigen Grundkörper 2 auf, der an zwei einander gegenüberliegenden Seitenflächen eine Grundplatte 3 und eine Abdeckplatte 4 aufweist und der in der Art eines Rahmens ausgebildet ist. Fig. 2a zeigt eine Schnittdarstellung durch den Grundkörper 2 mit einem ersten plattenförmigen optischen Element 5, welches eine plane Strahleintrittsfläche 5a und eine plane Strahlaustrittsfläche 5b aufweist. Die Strahlaustrittsfläche 5b ist gegenüber der Strahleintrittsfläche 5a unter einem Keilwinkel γ ausgerichtet, der ca. 0,5° beträgt. Eine Strahlfalle 2a, die zur Absorption von stirnseitig aus dem ersten plattenförmigen optischen Element 5 austretender Strahlung dient, ist lose in den Grundkörper 2 eingelegt. Zur Minimierung des thermischen Einflusses auf den Grundkörper 2 ist die Strahlfalle 2a nicht unmittelbar mit dem Grundkörper 2 verbunden und wird separat gekühlt.

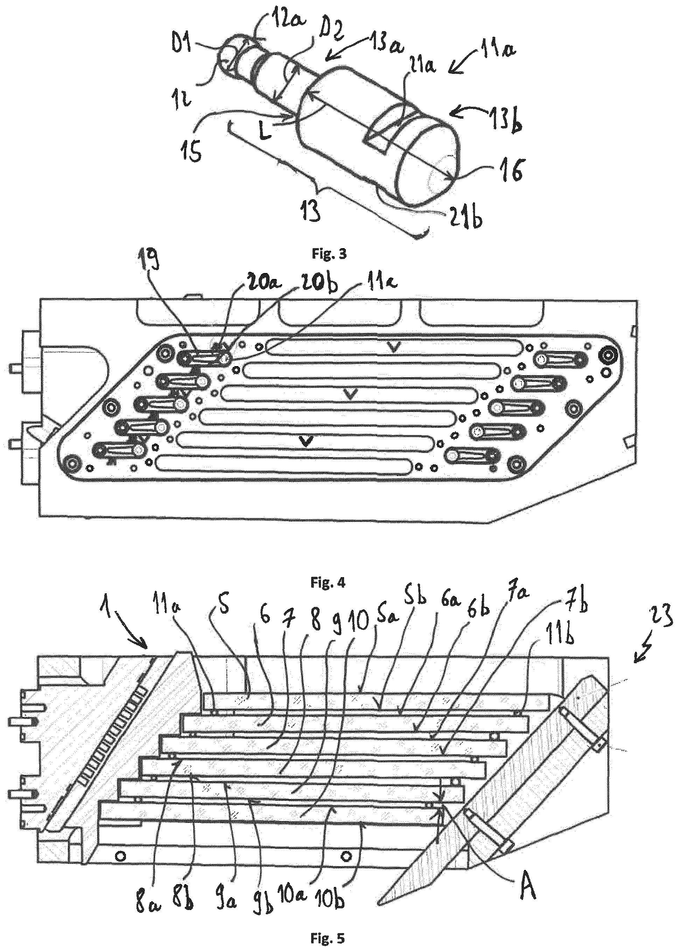

Nach dem Einlegen der Strahlfalle 2a wird das in Fig. 2a gezeigte erste plattenförmige optische Element 5 in die Halterung 1 verbracht. Das erste plattenförmige optische Element 5 liegt hierbei mit seiner Strahlaustrittsfläche 5b punktuell auf vier Abstandshaltern **11a-d** auf, die in **Fig. 2b** dargestellt sind. Wie in Fig. 2b und insbesondere in Fig. 3 zu erkennen ist, weisen die Abstandshalter 11a-d jeweils einen Kugelkopf 12 auf, der eine umlaufende Kugelfläche 12a aufweist, die zur punktuellen Anlage an der Strahlaustrittsfläche 5b des ersten plattenförmigen optischen Elements 5 dient. Der Abstand bzw. die Breite eines Spalts zwischen dem ersten optischen Element 5 und einem benachbarten optischen Element variiert ortsabhängig, weshalb im gezeigten Beispiel die vier Abstandshalter 11a-d einen Kugelkopf 12 mit einem jeweils unterschiedlichen Kugel-Durchmesser **D1** aufweisen.

Für die Lagerung des jeweiligen Abstandshalters 11a-d an der Halterung 1 weisen die Abstandshalter 11a-d jeweils einen Schaft 13 auf, der in eine in der Halterung 1 vorgesehene Bohrung **14a-d** eingesetzt ist. Der Schaft 13 weist einen Absatz **15** auf, der zwischen einem ersten Schaftabschnitt **13a** und einem zweiten Schaftabschnitt **13b** gebildet ist. Der erste Schaftabschnitt 13a ist zwischen dem Kugelkopf 12 und dem Absatz 15 gebildet, während der zweite Schaftabschnitt 13b zwischen dem Absatz 15 und einem Schaftende **16** des Abstandshalters 11a gebildet ist. Für die Aufnahme eines jeweiligen Schafts 13 ist an den zugehörigen Bohrungen 14a-d ebenfalls eine Stufe bzw. ein jeweiliger Absatz gebildet.

Um zu vermeiden, dass ein Abstandshalter 11a-d, der nicht für eine entsprechende Bohrung 14a-d vorgesehen ist, weil dieser einen falschen Kugel-Durchmesser D1 aufweist, in dem Halter 1 angebracht wird, funktionieren die unterschiedlichen Abstandshalter 11a-d und die zugehörigen Bohrungen 14a-d nach dem Schlüssel-Schloss-Prinzip: Abstandshalter 11a-d, die einen unterschiedlichen Kugel-Durchmesser D1 aufweisen, unterscheiden sich sowohl im Durchmesser **D2** des ersten Schaftabschnitts 13a als auch in der Länge L des zweiten Schaftabschnitts 13b derart, dass Abstandshalter 11a-d mit einem größeren Durchmesser D2 des ersten Schaftabschnitts 13a eine kleinere Länge L des zweiten Schaftabschnitts 13b aufweisen, und umgekehrt. Abstandshalter 11a-d, die einen für eine jeweilige Bohrung 14a-d zu großen Durchmesser D2 des ersten Schaftabschnitts 13a aufweisen, können nicht in eine falsche Bohrung 14a-d eingesetzt werden. Diejenigen Abstandshalter 11a-d, bei denen der erste Schaftabschnitt 13a einen kleineren Durchmesser D2 aufweist als der Durchmesser der entsprechenden Bohrung 14a-d, die aber dennoch nicht für diese Bohrung 14a-d vorgesehen sind, weisen eine Länge L des zweiten Schaftabschnitts 13b auf, die so gewählt ist, dass das Schaftende 16 nach außen über die Bohrung 14a-d übersteht.

Ein solcher überstehender Schaft 13 eines ersten bzw. zweiten Abstandshalters 11a,b kann nicht mittels einer jeweiligen Verschlussplatte **17a,b** abgedeckt werden, die auf die Abdeckplatte 24 aufgeschraubt wird (vgl. Fig. 2b). Entsprechend kann ein jeweiliger Abstandshalter 11c,d nicht von zwei in Fig. 2b nicht dargestellten Verschlussplatten abgedeckt werden, welche an der gegenüberliegenden Seite auf die Grundplatte 3 aufgeschraubt werden. Auf diese Weise ist sichergestellt, dass nur ein Abstandshalter 11a-d mit einer einzigen, passenden Bauart in eine zugehörige Bohrung 14a-d aufgenommen wird.

Um eine Dickentoleranz des ersten plattenförmigen optischen Elements 5 auszugleichen, weisen die Abstandshalter 11a-d einen Bewegungs-Freiheitsgrad in einer Richtung parallel zur Strahleintrittsfläche 5a des ersten plattenförmigen optischen Elements 5 auf. Der Bewegungs-Freiheitsgrad ist im gezeigten Beispiel dadurch realisiert, dass die Abstandshalter 11a-d in der Halterung 1 senkrecht zur Strahleintrittsfläche 5a des ersten plattenförmigen optischen Elements 5 kippbar gelagert sind. Für die kippbare Lagerung ist das Schaftende 13 eines jeweiligen Abstandshalters 11a-d konvex gekrümmt, wie dies insbesondere in Fig. 3 zu erkennen ist. Wie in Fig. 2b und in **Fig. 4** zu erkennen ist, ragt das Schaftende 16 des Schafts 13 eines jeweiligen Abstandshalters 11a-d in ein Langloch **18** hinein, in dem eine Blattfeder **19** geführt ist.

Die Blattfeder 19 ist am dem Abstandshalter 11a-d abgewandten Ende des Langlochs 19 mittels einer Schraube befestigt und weist zwei durch einen Schlitz getrennte freien Enden **20a,b** auf, die in zwei parallel verlaufende Nuten **21a,b** an dem Schaft 13, genauer gesagt an dem zweiten Schaftabschnitt 13b, eingreifen. Die Blattfeder 19 drückt das Schaftende 16 eines jeweiligen Abstandshalters 11a-d gegen eine Anlagefläche **22a-c,** die an der Innenseite der ersten, der zweiten bzw. der dritten Verschlussplatte 17a-c gebildet ist. Die Blattfeder 19 erzeugt eine Rückstellkraft auf den Schaft 13, wenn dieser aus einer parallel zur jeweiligen Bohrung 14a-d ausgerichteten Grundstellung senkrecht zur Strahleintrittsfläche 5a des ersten plattenförmigen optischen Elements 5 verkippt wird.

**Fig. 5** zeigt eine Schnittdarstellung einer optischen Baugruppe **23,** welche die weiter oben beschriebene Halterung 1 sowie sechs plattenförmige optische Elemente 5, **6, 7, 8, 9, 10** aufweist. Jeweils zwei benachbarte plattenförmige optische Elemente 5-10 sind wie weiter oben in Zusammenhang mit Fig. 2a dargestellt jeweils durch vier Abstandshalter 11a-d voneinander beabstandet, die punktuell an einer jeweiligen Strahlaustrittsfläche 5b, 6b, 7b, 8b, 9b und an einer jeweils benachbarten Strahleintrittsfläche 6a, 7a, 8a, 9a, 10a anliegen. Bei dem in Fig. 5 gezeigten Beispiel weisen jeweils zwei benachbarte plattenförmige optische Elemente 5-10 einen minimalen Abstand **A** von weniger als 3 mm, ggf. von weniger als 1 mm voneinander auf, der einer minimalen Spaltbreite zwischen den plattenförmigen optischen Elementen 5-10 entspricht.

Die plattenförmigen optischen Elemente 5-10 sind in zwei Ebenen zueinander verkippt, d.h. deren Strahleintrittsflächen 5a-10a und deren Strahlaustrittsflächen 5b-10b sind nicht parallel zueinander ausgerichtet. Aus diesem Grund werden wie weiter oben beschrieben mehrere Arten von Abstandshaltern 11a-d mit unterschiedlichen Kugel-Durchmessern D1 benötigt, um die plattenförmigen optischen Elemente 5-10 unter einem jeweils geeigneten Winkel zueinander auszurichten. Wie in Fig. 5 ebenfalls zu erkennen ist, sind die plattenförmigen optischen Elementen 5-10 parallel zur Strahleintrittsfläche 5a des ersten plattenförmigen optischen Elements 5 lateral versetzt angeordnet. Durch den lateralen Versatz bzw. durch die gestufte Anordnung sowie durch eine geeignete Wahl des Abstandes A zwischen den plattenförmigen optischen Elementen 5-10 kann die Anzahl der Kugel-Durchmesser D1 und somit die Anzahl der unterschiedlichen Typen von Abstandshaltern 11a-d verringert werden, die für die Winkel-Ausrichtung benötigt werden.

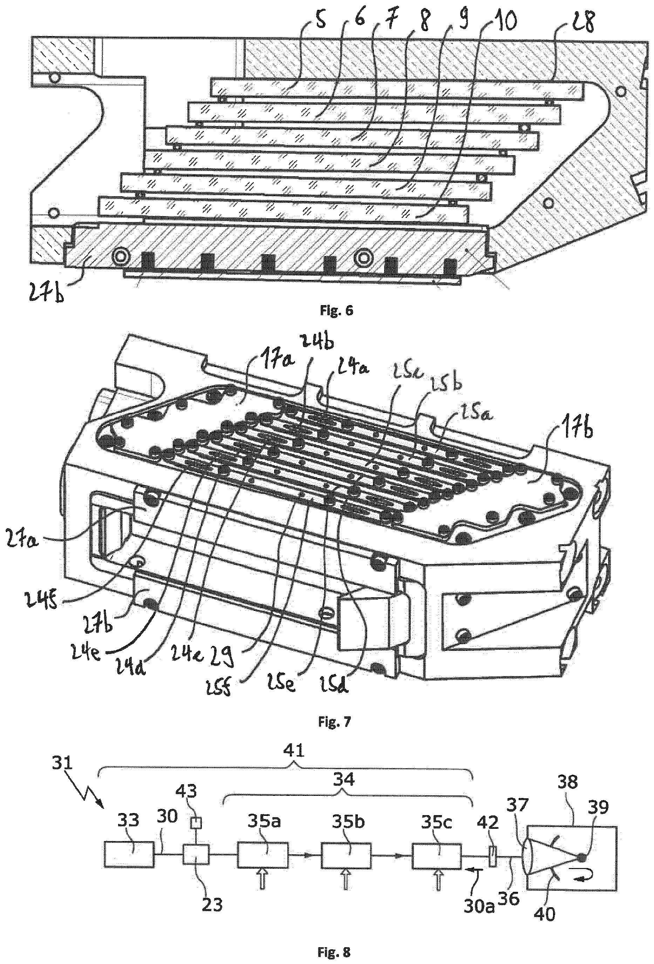

**Fig. 6** und **Fig. 7** zeigen die optische Baugruppe 23, bei der die sechs plattenförmigen optischen Elemente 5-10 an ihrer jeweiligen Längsseite mit Hilfe von sechs Leisten **24a-f** gegen den Grundkörper 2 der Halterung 1 angedrückt werden. Die Leisten 24a-f werden durch in Fig. 1 gezeigte Längsschlitze in der Abdeckplatte 4 in die Halterung 1 eingeführt und mit Hilfe von sich ebenfalls in Längsrichtung erstreckenden schienenförmigen Blattfedern **25a-f** an den Grundkörper 2 angebunden bzw. mit diesem verschraubt. Für die federnde Lagerung der Leisten 24a-f sind diese in einem Mittelabschnitt der schienenförmigen Blattfedern 25a-f befestigt, genauer gesagt mit diesem verschraubt. Der Mittelabschnitt der schienenförmigen Blattfedern 25a-f, an dem die Leisten 24a-f befestigt sind, ist federnd über durch einen Schlitz voneinander getrennte zungenförmige Schienenabschnitte mit die äußeren Enden der schienenförmigen Blattfedern 25a-f verbunden. Das Andrücken der plattenförmigen optischen Elemente 5-10 gegen den Grundkörper 2 ist günstig, um die Wärmeübertragung zwischen den plattenförmigen optischen Elementen 5-10 und dem Grundkörper 2 zu verbessern. In dem Grundkörper 2 sind Kühlkanäle **26** zur Durchströmung mit einem Kühlfluid, und zwar mit Kühlwasser, eingebracht. Vier derartige Kühlkanäle 26 sind beispielhaft in Fig. 1 dargestellt.

Wie weiter oben beschrieben wurde, sind die Abstandshalter 11a-d in einer Richtung senkrecht zur Strahleintrittsfläche 5a des ersten plattenförmigen optischen Elements 5 beweglich bzw. verkippbar gelagert. Um die sechs plattenförmigen optischen Elemente 5-10 als Ganzes, d.h. als Stapel, in der Halterung 1 zu fixieren, weist die Halterung zwei gefedert gelagerte Andrückelemente **27a,b** auf, die im gezeigten Beispiel als Leisten ausgebildet sind, die sich in Längsrichtung entlang der Strahlaustrittsfläche 10b des sechsten plattenförmigen optischen Elements 10 erstrecken. Wie in Fig. 7 zu erkennen ist, bilden die beiden Andrückelemente 27a,b zwei Schenkel eines Rahmens, zwischen denen ein Freiraum für den Durchtritt des Laserstrahls gebildet ist. Wie in Fig. 6 gezeigt ist, drücken die Andrückelemente 27a,b flächig gegen die Strahlaustrittsfläche 10b des sechsten plattenförmgen optischen Elements 10 und drücken auf diese Weise alle sechs mittels der Abstandshalter 11a-d voneinander beabstandeten plattenförmigen optischen Elemente 5-10 gegen eine plane, rahmenförmige Andrückfläche **28** der Halterung 1. Die Andrückelemente 27a,b in Form der Leisten sind gefedert an dem Grundkörper 2 gelagert, um eine Beschädigung der plattenförmigen optischen Elemente 5-10 bei der Fixierung bzw. beim Klemmen zu vermeiden.

Die auf die weiter oben beschriebene Weise in der Halterung 1 fixierten plattenförmigen optischen Elemente 5-10 können zusätzlich in der Halterung 1 verklebt werden, um diese für den Transport zu sichern und/oder um den Wärmeübergang zwischen den plattenförmigen optischen Elementen 5-10 und der Halterung 1 zu verbessern. Für die Applikation eines Klebstoffs sind in der Halterung 1, beispielsweise in der Grundplatte 3 (vgl. Fig. 1 oder Fig. 2a) sowie in den Leisten 24a-f bzw. in den schienenförmigen Blattfedern 25a-f Bohrkanäle **29** vorgesehen. Durch die Bohrkanäle 29 kann der Klebstoff zu den Längsseiten der plattenförmigen, rechteckigen optischen Elemente 5-10 gelangen, um diese in der Halterung 1 stoffschlüssig zu fixieren.

Die weiter oben dargestellte optische Baugruppe 23 kann zur Polarisation eines Laserstrahls **30** (vgl. **Fig**. **8**) dienen, der so ausgerichtet ist, dass dieser unter dem Brewster-Winkel auf die Strahleintrittsfläche 5a des ersten plattenförmigen optischen Elements 5 auftrifft. Die Strahleintrittsflächen 6a-10a der im Strahlweg des Laserstrahls 30 nachfolgenden plattenförmigen optischen Elemente 6-10 sind so ausgerichtet, dass diese ebenfalls unter dem Brewster-Winkel zum Laserstrahl 30 ausgerichtet sind. Um dies zu erreichen, sind die optischen Elemente 5-10 um jeweils mindestens einen Drehwinkel zueinander verdreht, der so gewählt ist, dass er dem Betrag eines Ablenk-Winkels beim Durchtritt des Laserstrahls 30 durch ein jeweiliges optisches Element 5-10 entspricht. Beim Auftreffen des Laserstrahls 30 unter dem Brewster-Winkel auf die jeweilige Strahleintrittsfläche 5a-10a wird im Wesentlichen nur ein p-polarisierter Strahlungsanteil transmittiert, d.h. ein Strahlungsanteil, dessen Polarisationsrichtung parallel zur Einfallsebene des auftreffenden Laserstrahls 30 verläuft.

An Stelle eines unpolarisierten Laserstrahls kann auch ein p-polarisierter Laserstrahl 30 in die optische Baugruppe 23 eingestrahlt werden, welcher diese im Wesentlichen ohne Abschwächung verlässt. Die optische Baugruppe 23 dient in diesem Fall als optischer Isolator (bzw. als optische Diode), um den Durchtritt eines rückreflektierten Laserstrahls 30a, dessen Polarisationsrichtung gegenüber dem einfallenden Laserstrahl um 90° gedreht ist (d.h. einen s-polarisierten Laserstrahl 30a) durch die optische Baugruppe 23 zu verhindern. Nachfolgend wird eine Verwendung der optischen Baugruppe 23 als optischer Isolator in Zusammenhang mit einer in Fig. 8 stark schematisch dargestellten EUV-Strahlungserzeugungsvorrichtung 31 beschrieben.

Die EUV-Strahlungserzeugungsvorrichtung 31 umfasst eine Strahlquelle 33, eine Verstärkeranordnung **34** mit z.B. vier oder fünf optischen Verstärkern bzw. Verstärkerstufen **35a, 35b, 35c,** eine nicht näher dargestellte Strahlführungseinrichtung **36** sowie eine Fokussiereinrichtung **37.** Die Fokussiereinrichtung 37 dient dazu, den von der Strahlquelle 33 erzeugten und von der Verstärkeranordnung 34 verstärkten Laserstrahl 30 an einem Zielbereich in einer Vakuum-Kammer **38** zu fokussieren, in dem ein Target-Material **39** eingebracht ist. Das Target-Material 39 geht bei der Bestrahlung mit dem Laserstrahl 30 in einen Plasma-Zustand über und emittiert hierbei EUV-Strahlung, die mittels eines Kollektorspiegels **40** fokussiert wird. Bei dem in Fig. 8 gezeigten Beispiel weist der Kollektorspiegel 40 eine Öffnung zum Durchtritt des Laserstrahls 30 auf. Die Strahlquelle 33 weist im gezeigten Beispiel zwei CO₂-Laser auf, um einen Vor-Puls und einen Haupt-Puls zu erzeugen, die gemeinsam in der Verstärkeranordnung 34 verstärkt und auf das Target-Material 29 fokussiert werden. Die Strahlquelle 33 bildet gemeinsam mit der Verstärkeranordnung 34 eine Treiberlaseranordnung **41** der EUV-Strahlungserzeugungsvorrichtung 31.

Bei dem in Fig. 8 gezeigten Beispiel ist die optische Baugruppe 23 zwischen der Strahlquelle 33 und der Verstärkeranordnung 34 angeordnet und dient dazu, den von der Strahlquelle 33 erzeugten gepulsten Laserstrahl 30, der typischerweise bereits linear polarisiert ist, möglichst verlustfrei von der Treiberlaseranordnung 41 zum Target-Material 39 zu transmittieren und den an dem Target-Material 39 zurück reflektierten, in entgegen gesetzter Richtung propagierenden Laserstrahl 30a zu filtern bzw. umzulenken, so dass dieser nicht mehr zur Strahlquelle 33 bzw. zu optischen Elementen im Strahlweg vor der optischen Baugruppe 23 gelangen kann.

Um den an dem Target-Material 39 zurück reflektierten, erneut auf die optische Baugruppe 23 auftreffenden Laserstrahl 30a zu filtern bzw. umzulenken, wird dessen Polarisationsrichtung gegenüber dem in Vorwärtsrichtung aus der optischen Baugruppe 23 austretenden Laserstrahl 30 um 90° gedreht. Zur Drehung der Polarisationsrichtung des Laserstrahls 30 um 90° ist zwischen der optischen Baugruppe 23 und dem Target-Material 39 eine Phasenschiebe-Einrichtung **42** angeordnet. Bei der Phasenschiebe-Einrichtung 42 kann es sich beispielsweise um einen phasenschiebenden Spiegel handeln, der beim Durchlauf des in Richtung auf das Target-Material 39 propagierenden Laserstrahls 30 und des zurück reflektierten, in entgegen gesetzter Richtung propagierenden Laserstrahls 30a insgesamt einen Gangunterschied von λ/2 erzeugt und so die gewünschte Drehung der Polarisationsrichtung um 90° bewirkt. Es versteht sich, dass zu diesem Zweck auch andere phasenschiebende oder polarisationsdrehende optische Elemente verwendet werden können, die zwischen der optischen Baugruppe 23 und dem Target-Material 39 angeordnet sind.

Die Filterung des s-polarisierten zurück reflektierten Laserstrahls 30a in der optischen Baugruppe 23 erfolgt durch Reflexion an den jeweiligen Strahlaustrittsflächen 5b, 6b, ... für den einfallenden Laserstrahl 30, die für den zurück reflektierten Laserstrahl 30a Strahleintrittsflächen bilden. Der an der jeweiligen Strahlaustrittsfläche 5b, 6b, ... reflektierte s-polarisierte Strahlungsanteil kann zu einer Strahlfalle 43 umgelenkt werden. Die Strahlfalle 43 kann wie in Fig. 8 dargestellt ist außerhalb der Halterung 1 angeordnet sein, in der die plattenförmigen optischen Elemente 5-10 aufgenommen und in ihrer relativen Lage zueinander fixiert sind. Alternativ kann die Strahlfalle 43 in die Halterung 1 bzw. in ein entsprechendes Gehäuse der Polarisatoranordnung 1 integriert werden, sofern eine ausreichende Kühlung sichergestellt ist.

Es versteht sich, dass die optische Baugruppe 23 oder ggf. eine weitere optische Baugruppe 23 auch an anderer Stelle in der EUV-Strahlungserzeugungsvorrichtung 31 angeordnet werden kann, beispielsweise in der Strahlführungseinrichtung 36, um einen linear polarisierten Laserstrahl 20 zu erzeugen bzw. um einen optischen Isolator zu bilden.

## Patentansprüche

1. Optische Baugruppe (23), insbesondere zur Polarisation eines Laserstrahls (30), umfassend:
eine Mehrzahl von plattenförmigen optischen Elementen (5, 6, ...) mit einer Strahleintrittsfläche (5a, 6a, ...) und einer Strahlaustrittsfläche (5b, 6b, ...),
eine Halterung (1) zur gemeinsamen Fixierung der plattenförmigen optischen Elemente (5, 6, ...),
wobei zwischen jeweils zwei benachbarten plattenförmigen optischen Elementen (5, 6, ...) mindestens drei Abstandshalter (11a-d) angeordnet sind, die jeweils zur punktförmigen Anlage an einer Strahlaustrittsfläche (5a, 6a, ...) eines ersten plattenförmigen optischen Elements (5) und zur punktförmigen Anlage an einer Strahleintrittsfläche (6b, 7b, ...) eines zweiten, benachbarten plattenförmigen optischen Elements (6) ausgebildet sind, wobei die Abstandshalter (11a-d) in der Halterung (1) senkrecht zu einer Strahleintrittsfläche (5a) des ersten plattenförmigen optischen Elements (5) kippbar und/oder verschiebbar gelagert sind,
**dadurch gekennzeichnet,**
**dass** die Abstandshalter (11a-d) jeweils einen Schaft (13) aufweisen und dass der jeweilige Schaft (13) des Abstandshalters (11a-d) ein konvex gekrümmtes Schaftende (16) aufweist und die Halterung (1) mindestens ein Federelement (19) zum Andrücken des Schaftendes (16) gegen eine Anlagefläche (22a-c) der Halterung (1) umfasst und dadurch kippbar und/oder verschiebbar gelagert ist.

2. Optische Baugruppe nach Anspruch 1, bei welcher die Abstandshalter (11a-d) eine Kugelfläche (12a) zur punktförmigen Anlage an der jeweiligen Stahlaustrittsfläche (5b, 6b, ...) und an der jeweiligen Strahleintrittsfläche (6a, 7a, ...) aufweisen.

3. Optische Baugruppe nach Anspruch 2, bei welcher die Kugelflächen (12a) von mindestens zwei Abstandshaltern (11a-d), die zwischen dem ersten plattenförmigen optischen Element (5) und dem zweiten plattenförmigen optischen Element (6) angeordnet sind, einen unterschiedlichen Kugel-Durchmesser (D1) aufweisen.

4. Optische Baugruppe nach Anspruch 2 oder 3, bei welcher die Abstandshalter (11a-d) jeweils einen Kugelkopf (12) aufweisen, an dem die Kugelfläche (12a) gebildet ist, wobei sich an den Kugelkopf (12) der Schaft (13) zur Lagerung des jeweiligen Abstandshalters (11a-d) in der Halterung (1) anschließt.

5. Optische Baugruppe nach Anspruch 4, bei welcher der Schaft (13) einen Absatz (15) aufweist, und bei welcher bei mindestens zwei Abstandshaltern (11a-d), deren Kugelflächen (12a) einen unterschiedlichen Kugel-Durchmesser (D1) aufweisen, ein Durchmesser (D2) eines ersten Schaftabschnitts (13a) zwischen dem Kugelkopf (12) und dem Absatz (15) und eine Länge (L) eines zweiten Schaftabschnitts (13b) zwischen dem Absatz (15) und einem Schaftende (16) des Abstandshalters (11a-d) unterschiedlich groß sind.

6. Optische Baugruppe nach einem der vorhergehenden Ansprüche, bei welcher jeweils zwei benachbarte plattenförmige optische Elemente (5, 6, ...) einen minimalen Abstand (A) von weniger als 3 mm voneinander aufweisen.

7. Optische Baugruppe nach einem der vorhergehenden Ansprüche, bei welcher die Strahleintrittsflächen (5a, 6a, ...) und die Strahlaustrittsflächen (5b, 6b, ...) der plattenförmigen optischen Elemente (5, 6, ...) jeweils unter mindestens einem Keilwinkel (γ) zueinander ausgerichtet sind.

8. Optische Baugruppe nach einem der vorhergehenden Ansprüche, bei welcher bei mindestens zwei, insbesondere bei allen plattenförmigen optischen Elementen (5, 6, ...) die Strahleintrittsflächen (5a, 6a, ...) und die Strahlaustrittsflächen (5b, 6b, ...) nicht parallel zueinander ausgerichtet sind.

9. Optische Baugruppe nach einem der vorhergehenden Ansprüche, bei welcher die Halterung (1) eine Mehrzahl von Leisten (24a-f) zum Andrücken einer jeweiligen Seitenfläche eines plattenförmigen optischen Elements (5, 6, ...) gegen einen Grundkörper (2) der Halterung (1) aufweist.

10. Optische Baugruppe nach einem der vorhergehenden Ansprüche, bei welcher die Halterung (1) einen Grundkörper (2) mit mindestens einen Kühlkanal (26) zur Durchströmung mit einem Kühlfluid aufweist.

11. Optische Baugruppe nach einem der vorhergehenden Ansprüche, weiter umfassend: mindestens ein bevorzugt gefedert gelagertes Andrückelement (27a,b) zum Andrücken der mittels der Abstandshalter (11a-d) beabstandeten Mehrzahl der plattenförmigen optischen Elemente (5, 6, ...) gegen eine Andrückfläche (28) der Halterung (1).

12. Optische Baugruppe nach einem der vorhergehenden Ansprüche, bei welcher die plattenförmigen optischen Elemente (5, 6, ...) mit der Halterung (1) verklebt sind.

13. Optische Baugruppe nach einem der vorhergehenden Ansprüche, bei welcher die plattenförmigen optischen Elemente (5, 6, ...) mit einem lateralen Versatz zueinander in der Halterung (1) angeordnet sind.

14. EUV-Strahlungserzeugungsvorrichtung (31), umfassend: eine Treiberlasereinrichtung (33) zur Erzeugung eines Laserstrahls (30),
eine Vakuum-Kammer (38), in der ein Target-Material (39) anordenbar ist,
eine Strahlführungseinrichtung (42) zur Führung des Laserstrahls (30) von der Treiberlasereinrichtung (33) zum Target-Material (39), sowie eine optische Baugruppe (23) nach einem der vorhergehenden Ansprüche.

15. EUV-Strahlungserzeugungsvorrichtung nach Anspruch 14, weiter umfassend: eine Phasenschiebe-Einrichtung (42), die zwischen der optischen Baugruppe (23) und dem Target-Material (39) angeordnet ist, wobei die Phasenschiebe-Einrichtung (42) zur Bildung eines am Target-Material (39) reflektierten Laserstrahls (30a) ausgebildet ist, dessen Polarisationsrichtung senkrecht zur Polarisationsrichtung des zum Target-Material (39) propagierenden Laserstrahls (30) ausgerichtet ist.

## Claims

1. An optical assembly (23), in particular for polarizing a laser beam (30), comprising:
a plurality of plate-shaped optical elements (5, 6,...) having a beam entry surface (5a, 6a,...) and a beam exit surface (5b, 6b,...),
a holder (1) for joint fixing of the plate-shaped optical elements (5, 6,...),
wherein at least three spacers (11a-d) are arranged between each two adjacent plate-shaped optical elements (5, 6,...), each of which spacers is configured for punctiform contact with a beam exit surface (5a, 6a,...) of a first plate-shaped optical element (5) and for punctiform contact with a beam entry surface (6b, 7b,...) of a second, adjacent plate-shaped optical element (6),
wherein the spacers (11a-d) are held in the holder (1) perpendicularly to a beam entry surface (5a) of the first plate-shaped optical element (5) such that they are tiltable and/or displaceable,
**characterized**
**in that** the spacers (11a-d) have a respective shaft (13) and in that the respective shaft (13) of the spacer (11a-d) has a convexly curved shaft end (16) and the holder (1) comprises at least one spring element (19) for pressing the shaft end (16) against a contact surface (22a-c) of the holder (1) and thereby is held such that it is tiltable and/or displaceable.

2. The optical assembly as claimed in claim 1, wherein the spacers (11a-d) have a spherical surface (12a) for punctiform contact with the respective beam exit surface (5b, 6b,...) and with the respective beam entry surface (6a, 7a,...).

3. The optical assembly as claimed in claim 2, wherein the spherical surfaces (12a) of at least two spacers (11a-d) arranged between the first plate-shaped optical element (5) and the second plate-shaped optical element (6) have different spherical diameters (D1).

4. The optical assembly as claimed in claim 2 or 3, wherein the spacers (11a-d) each have a ball head (12) on which the spherical surface (12a) is formed, wherein the shaft (13) for holding the respective spacer (11a-d) in the holder (1) is connected to the ball head (12).

5. The optical assembly as claimed in claim 4, wherein the shaft (13) has a shoulder (15), and wherein in the case of at least two spacers (11a-d) whose spherical surfaces (12a) have different spherical diameters (D1), a diameter (D2) of a first shaft section (13a) between the ball head (12) and the shoulder (15) and a length (L) of a second shaft section (13b) between the shoulder (15) and a shaft end (16) of the spacer (11a-d) are of different sizes.

6. The optical assembly as claimed in one of the preceding claims, wherein two adjacent plate-shaped optical elements (5, 6,...) each have a minimum distance (A) of less than 3 mm from one another.

7. The optical assembly as claimed in one of the preceding claims, wherein the beam entry surfaces (5a, 6a,...) and the beam exit surfaces (5b, 6b,...) of the plate-shaped optical elements (5, 6,...) are each aligned at at least one wedge angle (γ) with respect to one another.

8. The optical assembly as claimed in one of the preceding claims, wherein the beam entry surfaces (5a, 6a,...) and the beam exit surfaces (5b, 6b,...) in at least two, in particular in all, plate-shaped optical elements (5, 6,...) are not aligned parallel to one another.

9. The optical assembly as claimed in one of the preceding claims, wherein the holder (1) has a plurality of bars (24a-f) for pressing a respective side surface of a plate-shaped optical element (5, 6,...) against a base body (2) of the holder (1).

10. The optical assembly as claimed in one of the preceding claims, wherein the holder (1) has a base body (2) with at least one cooling channel (26) for a cooling fluid to flow through.

11. The optical assembly as claimed in one of the preceding claims, further comprising: at least one preferably spring-mounted pressing element (27a,b) for pressing the plurality of plate-shaped optical elements (5, 6,...) that are spaced apart by means of the spacers (11a-d) against a pressure surface (28) of the holder (1).

12. The optical assembly as claimed in one of the preceding claims, wherein the plate-shaped optical elements (5, 6,...) are adhesively bonded to the holder (1).

13. The optical assembly as claimed in one of the preceding claims, wherein the plate-shaped optical elements (5, 6,...) are arranged in the holder (1) with a lateral offset with respect to one another.

14. An EUV radiation generating apparatus (31), comprising: a driver laser device (33) for generating a laser beam (30),
a vacuum chamber (38) in which a target material (39) is arrangeable,
a beam guidance device (42) for guiding the laser beam (30) from the driver laser device (33) to the target material (39), and
an optical assembly (23) as claimed in one of the preceding claims.

15. The EUV radiation generating apparatus as claimed in claim 14, further comprising: a phase shifting device (42) arranged between the optical assembly (23) and the target material (39), wherein the phase shifting device (42) is configured to form a laser beam (30a) that is reflected at the target material (39) and the polarization direction of which is aligned perpendicularly to the polarization direction of the laser beam (30) propagating to the target material (39).

## Revendications

1. Ensemble optique (23), en particulier pour la polarisation d'un faisceau laser (30), comprenant :
une pluralité d'éléments optiques en forme de plaque (5, 6, ...) avec une surface d'entrée de faisceau (5a, 6a, ...) et une surface de sortie de faisceau (5b, 6b,...), un support (1) pour une fixation commune des éléments optiques en forme de plaque (5, 6, ...),
entre deux éléments optiques adjacents en forme de plaque (5, 6, ... ) étant agencées au moins trois entretoises (11a-d), qui sont conçues chacune pour un contact ponctuel avec une surface de sortie de faisceau (5a, 6a, ...) d'un premier élément optique en forme de plaque (5) et pour un contact ponctuel avec une surface d'entrée de faisceau (6b, 7b, ...) d'un second élément optique adjacent en forme de plaque (6), les entretoises (11a-d) étant montées dans le support (1) de manière à pouvoir basculer et/ou se déplacer perpendiculairement à une surface d'entrée de faisceau (5a) du premier élément optique en forme de plaque (5),
**caractérisé en ce que**
les entretoises (11a-d) présentent chacune une tige (13), et la tige respective (13) de l'entretoise (11a-d)
présente une extrémité de tige (16) incurvée de manière convexe et le support (1) comprend au moins un élément à ressort (19) pour presser l'extrémité de tige (16) contre une surface d'appui (22a-c) du support (1) et est ainsi monté de manière à pouvoir basculer et/ou se déplacer.

2. Ensemble optique selon la revendication 1, dans lequel les entretoises (11a-d) présentent une surface sphérique (12a) pour un contact ponctuel sur la surface de sortie de faisceau respective (5b, 6b, ...) et sur la surface d'entrée de faisceau respective (6a, 7a, ...).

3. Ensemble optique selon la revendication 2, dans lequel les surfaces sphériques (12a) d'au moins deux entretoises (11a-d), qui sont agencées entre le premier élément optique en forme de plaque (5) et le second élément optique en forme de plaque (6), présentent un diamètre de sphère (D1) différent.

4. Ensemble optique selon la revendication 2 ou 3, dans lequel les entretoises (11a-d) présentent chacune une tête sphérique (12) sur laquelle la surface sphérique (12a) est formée,
la tige (13) se raccordant à la tête sphérique (12) pour supporter l'entretoise respective (11a-d) dans le support (1).

5. Ensemble optique selon la revendication 4, dans lequel la tige (13) présente un gradin (15) et dans lequel, pour au moins deux entretoises (11a-d) dont les surfaces sphériques (12a) présentent un diamètre de sphère (D1) différent, un diamètre (D2) d'une première partie de tige (13a) entre la tête sphérique (12) et le gradin (15) et une longueur (L) d'une seconde partie de tige (13b) entre le gradin (15) et une extrémité de tige (16) de l'entretoise (11a-d) présentent des tailles différentes.

6. Ensemble optique selon l'une quelconque des revendications précédentes, dans lequel deux éléments optiques adjacents en forme de plaques (5, 6, ...) respectifs présente une distance minimale (A) inférieure à 3 mm.

7. Ensemble optique selon l'une quelconque des revendications précédentes, dans lequel les surfaces d'entrée de faisceau (5a, 6a, ...) et les surfaces de sortie de faisceau (5b, 6b, ...) des éléments optiques en forme de plaque (5, 6, ...) sont respectivement alignées les unes par rapport aux autres sous au moins un angle de coin (γ).

8. Ensemble optique selon l'une quelconque des revendications précédentes, dans lequel pour au moins deux, en particulier tous les éléments optiques en forme de plaques (5, 6,...), les surfaces d'entrée de faisceau (5a, 6a, ...) et les surfaces de sortie de faisceau (5b, 6b, ...) ne sont pas alignées parallèlement les unes par rapport aux autres.

9. Ensemble optique selon l'une quelconque des revendications précédentes, dans lequel le support (1) comprend une pluralité de lattes (24a-f) pour presser une surface latérale respective d'un élément optique en forme de plaque (5, 6, ...) contre un corps de base (2) du support (1).

10. Ensemble optique selon l'une quelconque des revendications précédentes, dans lequel le support (1) présente un corps de base (2) avec au moins un canal de refroidissement (26) pour le passage d'un fluide de refroidissement.

11. Ensemble optique selon l'une quelconque des revendications précédentes, comprenant en outre : au moins un élément de pression (27a,b) monté de préférence à ressort pour presser la majorité des éléments optiques en forme de plaque (5, 6, ...) espacés au moyen des entretoises (11a-d) contre une surface de pression (28) du support (1).

12. Ensemble optique selon l'une quelconque des revendications précédentes, dans lequel les éléments optiques en forme de plaque (5, 6, ...) sont collés au support (1).

13. Ensemble optique selon l'une quelconque des revendications précédentes, dans lequel les éléments optiques en forme de plaque (5, 6, ...) sont disposés avec un décalage latéral les uns par rapport aux autres dans le support (1).

14. Dispositif de génération de rayonnement EUV (31), comprenant : un dispositif de laser d'excitation (33) pour générer un faisceau laser (30), une chambre à vide (38) dans laquelle un matériau cible (39) peut être disposé, un dispositif de guidage de faisceau (42) pour guider le faisceau laser (30) du dispositif laser d'excitation (33) vers le matériau cible (39), ainsi qu'un ensemble optique (23) selon l'une quelconque des revendications précédentes.

15. Dispositif de génération de rayonnement EUV selon la revendication 14, comprenant en outre : un dispositif de déphasage (42) qui est agencé entre l'ensemble optique (23) et le matériau cible (39), dans lequel le dispositif de déphasage (42) est conçu pour former un faisceau laser (30a) réfléchi sur le matériau cible (39), dont la direction de polarisation est orientée perpendiculairement à la direction de polarisation du faisceau laser (30) se propageant vers le matériau cible (39).
